# EUROPEAN PATENT APPLICATION

(11) **EP 1 116 674 A1**
(43) Date of publication of application: **18.07.2001**
(21) Application number: 00128119.5
(22) Date of filing: 21.12.2000
(51) Int. Cl.: B65G 35/06

(54) **A carriage for an endless conveyor and a conveyor mechanism for such a carriage**

(30) Priority: 17.01.2000 JP 2000008299
(71) Applicant: Sumitomo Wiring Systems, Ltd., Yokkaichi-shi, Mie 510-8503 (JP)
(72) Inventor: Akatsuka, Isamu, Yokkaichi-City, Mie 510-8503 (JP); Nakano,Yuuji, Yokkaichi City, Mie,k510-8503 (JP); Takano,Yoshitomo, Yokkaichi City,Mie k510-8503 (JP)
(74) Representative: Müller-Boré & Partner Patentanwälte

(57) **Abstract**

[Object]

To easily cope with a change in specification of stations.

[Solution]

A plurality of carriages 100 are coupled by carriage coupling means 200, 210. Driving units 20 are provided to move entire coupled units B1, B2 together by driving some of the coupled carriages 100. A distance of conveyance can be changed and a change in specification can be easily coped with only by rearranging the driving units 20.

## Description

The present invention relates to a carriage for an endless conveyor and a conveying mechanism for such a carriage.

Generally, in a production line for processing works being circulated from one station to another, an endless conveyor is used. The endless conveyor includes carriages for circulating from one to another of a plurality of stations set along a conveyance path which is oblong in plan view and a driving unit for circulating the carriage along the conveyance path. The driving unit is provided with a pair of sprockets, a driving source for driving one of the sprockets, and an endless chain mounted between the sprockets, and a plurality of carriages are connected with this chain. In order to couple the carriages with the chain, the chain has been conventionally provided with joints at specified intervals and the respective carriages are provided with coupling members to be coupled with these joints.

With the production of many kinds of products, there has been, in recent years, an increasing demand to make it easier to change the number of stations installed in a production line.

For example, in the case of producing automotive wiring harnesses, it is necessary to individually set specifications according to the lengths of wires of the wiring harnesses, the number of connectors and the number of contacts of the connectors, etc. One of production modes is such that a plurality of kinds of wiring harnesses are simultaneously produced in one production line. Accordingly, it is sometimes necessary to change setting of the stations and corresponding conveyance paths as vehicle type and product number are changed or quantity of production is increased or decreased. In such a case, it is necessary to frequently change the length of the chain and to frequently connect and disconnect the coupling members of the carriages with and from the joints of the chain in the prior art conveyor constructed such that a plurality of carriages are coupled with the joints of the endless chain. This requires much time and labor to change the specification and setup, resulting in a poor productivity.

In view of the above problem, an object of the present invention is to provide a carriage for an endless conveyor in which specification can be easily changed and a conveying mechanism for such a carriage.

This object is solved according to the invention by a carriage according to claim 1 and by a conveying mechanism according to claim 5. Preferred embodiments of the invention are subject of the dependent claims.

According to the present invention, there is provided a carriage for an endless conveyor having an endless conveyance path comprised at least of a pair of substantially linear paths and turning paths connecting the opposite ends of the substantially linear paths, in which conveyor a plurality of carriages are used and driven by a driving unit of the conveyor to circulate along the conveyance path in a predetermined conveyance direction, comprising:
a torque input member for receiving a torque from the driving unit for moving the carriage in the conveyance direction, and
a carriage coupling means for connecting carriages such that the torque received by one of the carriages arranged on the conveyance path from the driving unit can be transmitted to the succeeding carriages,
wherein the carriage coupling means separates the carriage from the succeeding carriage when this carriage moves from one linear path to the turning path while coupling the separated carriage with the preceding carriage when it moves from the turning path to another linear path.

According to a preferred embodiment, the carriage coupling means comprises at least a driving member and a driven member.

Preferably, the driving member comprises of a rotatable cam provided on one carriage and the driven member comprises and projections mounted on the adjacent carriage, wherein the projections are spaced apart substantially in the longitudinal direction of the carriages and are formed with corresponding cam surfaces so that the rotatable cam can be fitted into and withdrawn from an engaging space defined between the projections.

Further preferably, the cam surfaces of the projections can transmit a force of the rotatable cam for moving substantially along the longitudinal direction of the carriage to the other carriage on which the driven member is mounted, and permit the rotatable cam to be fitted into and withdrawn from the engaging space if the rotatable cam moves in a direction at an angle different from 0° or 180°, preferably substantially normal to the above direction.

Most preferably, the carriage further comprises a torque input member having a linear movement input member for transmitting an output of a linearly driving member of the endless conveyor to the carriage by being detachably couplable or coupled to the linearly driving member, and a turning movement input member for transmitting a torque of a turning member of the endless conveyor to the carriage to turn it by being detachably couplable or coupled to the turning member while running.

According to the present invention, there is further provided a conveying mechanism for circulating carriages according to the invention or an embodiment thereof in a predetermined conveyance direction along an endless conveyance path comprised of a pair of substantially linear paths and turning paths connecting the opposite ends of the substantially linear paths, comprising one or more driving units, preferably a pair of driving units provided at the opposite ends and between the substantially linear paths, for driving the respective carriages, wherein the driving units, preferably the pair of driving units comprise:
turning means for separating the carriages located at downstream ends of coupled units of the respective carriages coupled along the substantially linear paths and turning them along the turning paths, and
linear movement output members which operate in synchronism with the turning means to convey the downstream ends of the coupled units coupled along the substantially linear paths to the turning means.

Since the coupled units can be formed by coupling a plurality of carriages in series in this invention, a series of the carriages can be driven along the conveyance path only by driving some carriages. Further, since the carriage coupling means separates the carriage from the succeeding carriage when this carriage moves from one linear path to the turning path while coupling the separated carriage with the preceding carriage when it moves from the turning path to another linear path, only the carriages displacing from the linear paths to the turning paths can be separated from the coupled units and individually turned and can be coupled with the ends of the preceding coupled units after turning. Accordingly, the carriages can be circulated only by providing the pair of driving units at the opposite ends of the conveyance path and driving the downstream ends of the forward moving coupled unit and the returning coupled unit. As a result, in the case that the conveyance path is changed, a change in specification can be relatively easily coped with only by changing a spacing between the pair of driving units and the number of the carriages coupled.

In a specific embodiment, a torque input member of the carriage comprises a linear movement input member for transmitting an output of a linearly driving member of the endless conveyor to a main frame of the carriage by being detachably coupled to the linearly driving member, and a turning movement input member for transmitting a torque of a turning member of the endless conveyor to the main frame to turn it by being detachably coupled to the turning member while running. Preferably, a chain is used as the linear movement input member, and a cam follower and a rotatable cam detachably engageable with the cam follower are used as the turning movement input member.

According to a preferred embodiment of the invention, the turning means comprises a cam follower as a turning movement output member and a rotatable cam as a turning movement input member.

Preferably, the conveying mechanism further comprises a plurality of base blocks arranged or arrangeable substantially one after the other, wherein the base blocks comprise path defining means defining the conveyance path on the base blocks.

A specific mode for changing the conveyance path is preferably such that members forming the conveyance paths are formed into blocks, and the number of the blocks are changed. In such a case, a change in specification can be easily coped with only by changing the number of the blocks. Such blocks are preferably units having a length corresponding to stations.

Further specifically, the conveyance path is preferably formed on a table having a specified height.

By forming the conveyance path as above, since the height of the carriages can be reduced as much as the height of the table, the carriages can be formed smaller. Further, there is no possibility of damaging a floor surface and maintenance such as cleaning can be facilitated.

In the respective embodiments and modes described above, the carriages need not have the same specification. For instance, carriages having lengths at a ratio of 1:2 may be alternately arranged and conveyed in order to produce products having a plurality product numbers.

These and other objects, features and advantages of the present invention will become apparent upon reading of the following detailed description of preferred embodiments and accompanying drawings. It should be understood that even though embodiments are separately described, single features thereof may be combined to additional embodiments.
FIG. 1 is a schematic plan view showing a schematic construction of an endless conveyor according to one embodiment of the invention,
FIG. 2 is a partial side view enlargedly showing an essential portion of FIG. 1,
FIG. 3 is a front view of the embodiment of FIG. 1,
FIG. 4 is a perspective view of a carriage according to the embodiment of FIG. 1,
FIG. 5 is an enlarged partial section showing an essential portion of the embodiment of FIG. 1,
FIG. 6 is a schematic partial plan view showing a meshed state of a cam follower and a cam,
FIG. 7 is a schematic partial section showing a coupling construction of a driving member and a driven member as a carriage coupling means,
FIGS. 8 to 11 are schematic plan views showing conveyance of the carriages according to the embodiment of FIG. 1, and
FIG. 12 is a schematic plan view showing another embodiment of the invention.

Hereinafter, preferred embodiments of the invention are described in detail with reference to the accompanying drawings.

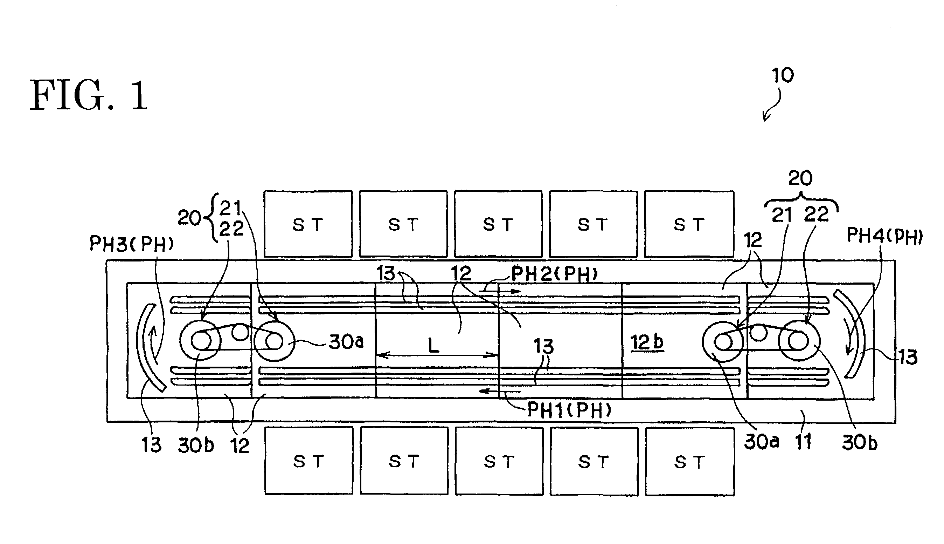

FIG. 1 is a schematic plan view showing a schematic construction of an endless conveyor according to one embodiment of the invention. First with reference to FIG. 1, a shown endless conveyor 10 is provided with a table 11 and base blocks 12 placed one after another on the table 11.

The table 11 preferably is a pedestal having a substantially rectangular plan view so as to substantially conform to operation steps of products to be assembled. In the shown embodiment, a plurality of stations ST are preferably set at the substantially opposite sides of the table 11 with respect to its widthwise direction in conformity with various operation steps (e.g. wire laying step, connector connecting step, external parts mounting step, testing step, etc.) for assembling a wiring harness. A carriage 100 to be described later circulates from one station to another in the order of operation steps.

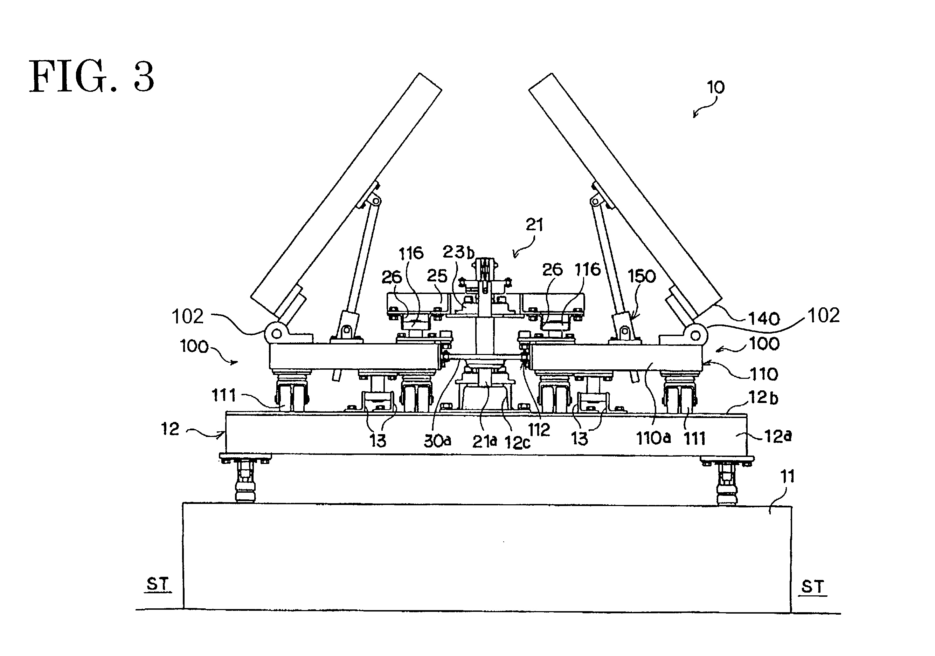

Each base block 12 is a block member formed by assembling substantially rectangular pipes 12a into a frame and securing a base plate 12b to the upper surface of the assembled frame (see FIG. 3). Dimensions L of the base blocks 12 along the longer sides of the table 11 are set substantially equal and substantially correspond to the length of the stations ST. Angles or brackets 13 are secured to the upper surface of the base plate 12b of each base block 12. These angles 13 construct such a conveyance path PH that the substantially opposite ends of a pair of linear paths, i.e. a forward path PH1 and a return path PH2 are made substantially continuous by turning paths PH3, PH4. A pair of driving units 20 are arranged at the substantially opposite ends and between the forward path PH1 and the return path PH2. Each driving unit 20 includes a pair of sprocket units 21, 22 which preferably are substantially opposed to each other in the longitudinal direction of the table 11.

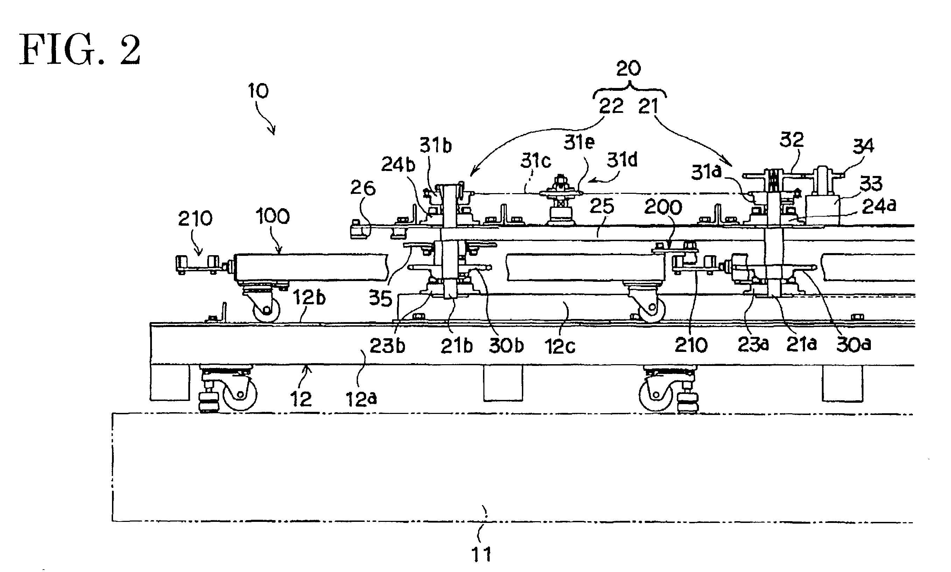

FIG. 2 is a partial side view enlargedly showing a portion of FIG. 1 and FIG. 3 is a front view of the endless conveyor of FIG. 1.

With reference to FIGS. 2 and 3, the sprocket units 21, 22 have shafts 21a, 21b rotatably standing on bearings 23a, 23b with respect to a mounting frame 12c secured to the upper surfaces of the corresponding base blocks 12, respectively. Intermediate parts of the shafts 21 a, 21 b bear an upper guide cover 25 via the bearings 23a, 23b, and guide rails 26 secured to the lower surface of the upper guide cover 25 are adapted to guide cam rollers 116 of the carriage 100 to be described later. Although not specifically shown, the upper guide cover 25 is also supported by the mounting frame 12c preferably via stays.

Output sprockets 30a, 30b as linear movement output members are fixed between the mounting frame 12c of the sprocket units 21, 22 and the upper guide cover 25. The output sprockets 30a, 30b are adapted to convey the conveyance carriage 100 as described later. The output sprockets 30a, 30b are at the same height, so that they can linearly drive the carriage 100 by coming into mesh with the same input portion (chain 112 to be described later) provided on the carriage 100.

On the other hand, sprockets 31a, 31b are secured to the shafts 21a, 21b in positions above the upper guide cover 25 in order to rotate the shafts 21a, 21b. The sprockets 31a, 31b are coupled preferably via a chain 31c and rotated in the same direction by the same driving source. In the shown embodiment, the upper guide cover 25 is provided with a sprocket unit 31d for regulating a tension. A sprocket 31e of the sprocket unit 31d is coupled with the chain 31c to regulate a tension of the chain 31c.

A gear 32 for inputting a torque is fixed at the upper end of the shaft 21a of one sprocket unit 21 located more inwardly with respect to the longitudinal direction of the table 11, and an output gear 34 of a driving motor 33 is in mesh with this gear 32. By this arrangement, upon receiving a torque of the motor 33 from the sprocket 31a, the sprocket unit 21 can rotate the output sprocket 30a via the shaft 21a and rotate the sprocket 31b of the other sprocket unit 22 via the chain 31c coupled with the sprocket 31a to thereby rotate the output sprocket 30b via the shaft 21b to which the sprocket 31b is fixed.

The driving unit 20 as described above is provided preferably at each of the substantially opposite ends of the conveyance path PH which is oblong in plan view. The motor 33 of each driving unit 20 is so controlled by an unillustrated controller as to drive the output sprockets 30a, 30b at the same peripheral speed.

In the shown embodiment, the shaft 21b of the other sprocket unit 22 is concentrically arranged with a center of an arc of the turning path PH3 (PH4), and has a cam follower 35 secured to its outer surface. As described in detailed later, the cam follower 35 constructs a turning movement output member for turning the carriage 100 to be described next in cooperation with the output sprocket 30b of the sprocket unit 22.

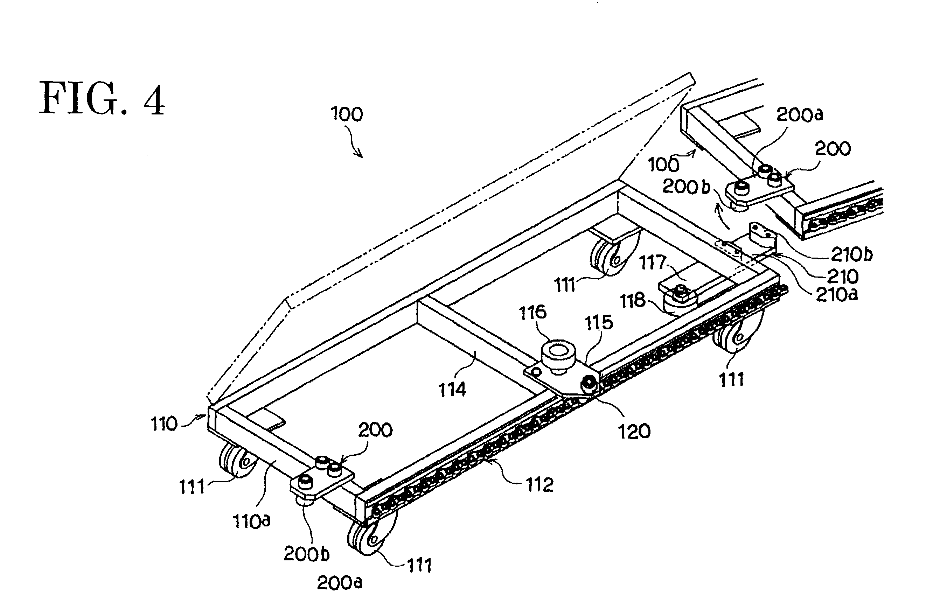

FIG. 4 is a perspective view of the carriage 100 according to the embodiment shown in FIG. 1.

With reference to FIGS. 3 and 4, the carriage 100 according to this embodiment is used in a production line of wiring harnesses, and is comprised of a main frame 110 formed e.g. by assembling substantially rectangular pipes, a wire laying board frame 140 mounted on top of the main frame 110 via a hinge 102 (shown only in FIG. 3), and a slidable clamp 150 (shown only in FIG. 3) for adjusting an angle of inclination of the wire laying board frame 140.

The main frame 110 is a frame body which is formed e.g. of substantially rectangular pipes 110a to have a length substantially corresponding to that of the layout of the wiring harness to be carried by the carriage 100 and is substantially rectangular in plan view, and is arranged such that its longitudinal direction extends along the linear path (forward PH1 or return path PH2) of the conveyance path PH. Casters 111 are mounted at the four corners of the main frame 110, so that the main frame 110 can freely move on the base plates 12b of the base blocks 12.

A chain 112 is secured to the outer surface of one side wall substantially extending along the longitudinal direction of the main frame 110 or carriage 100. This chain 112 is formed to be meshable with the respective output sprockets 30a, 30b of the driving units 20 and constructs a linear movement input member. Since the sprockets 30a, 30b are adopted as the output members of the driving units 20 and the chain 112 meshable with the sprockets 30a, 30b is adopted as an input member of the carriage 100 in the shown embodiment, no special coupling member is necessary to couple them with each other.

A reinforcing beam 114 extending preferably substantially in widthwise direction is provided in the longitudinal center of the main frame 110, and a base portion of a cam plate 115 is so secured to the upper surface of the reinforcing beam 114 as to partly project outward in widthwise direction. The cam roller 116 to be guided by the guide rail 26 of the upper guide cover 25 is rotatably mounted on the cam plate 115. A cam plate 117 cantilevers or projects to extend in the longitudinal direction of the main frame 110 from a downstream side with respect to a conveyance direction, and a cam roller 118 to be guided by the angles 13 secured to the base plates 12b of the base blocks 12 is rotatably mounted on the lower surface of the cam plate 117. The main frame 110 can be circulated along the conveyance path PH on the base blocks 12 by the above guiding construction by the cam rollers 116, 118.

A cam 120 as a turning movement input member is mounted on the upper surface of a free end of the cam plate 115.

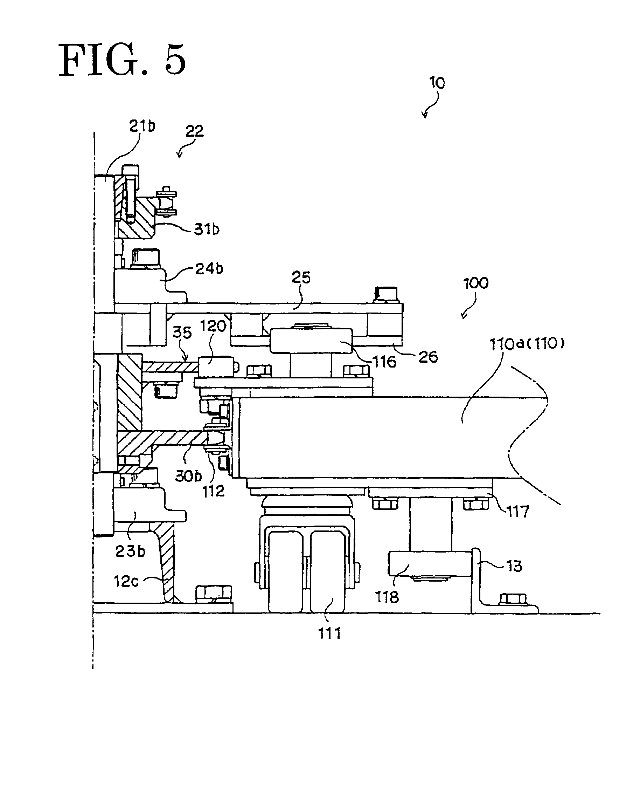

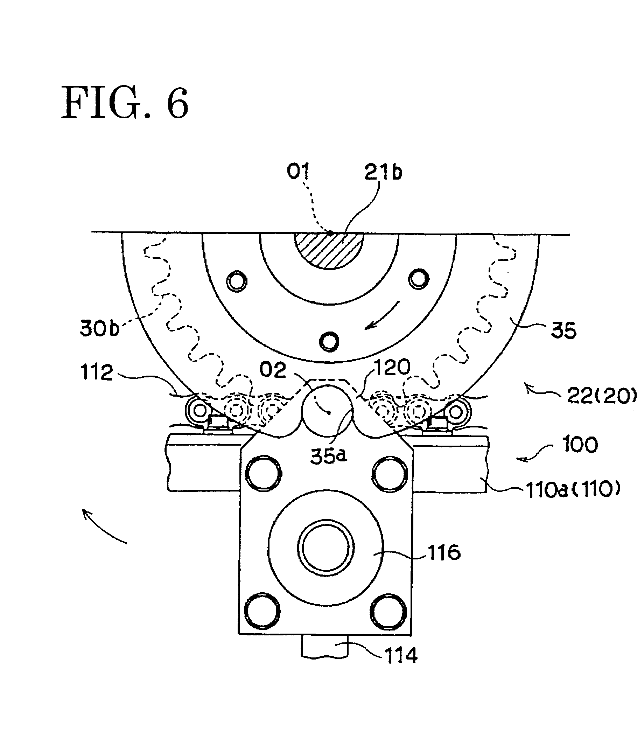

FIG. 5 is an enlarged partial section showing a portion of the embodiment shown in FIG. 1, and FIG. 6 is a schematic partial view showing a meshed state of the cam follower 35 and the cam 120.

With reference to FIGS. 5 and 6, the cam 120 is a rotatable member preferably having a substantially circular cross section, and the cam follower 35 has a recess 35a which is detachably engageable at least partly with the outer circumferential surface of the cam 120. The recess 35a is engaged with the cam 120 at a position where a center O1 of the shaft 21b of the other sprocket unit 22 and a center O2 of the cam 120 are preferably located on a horizontal line substantially normal to the linear path (forward path PH1 or return path PH2). By locking the output sprocket 30b fixed to the shaft 21b and the chain 112 of the carriage 100 within a range of 180° in this way, a torque of the output sprocket 30b is directly transmitted to the carriage 100 to turn it.

The main frame 110 of each carriage 100 is provided with a driving member 200 and a driven member 210 as a carriage coupling means.

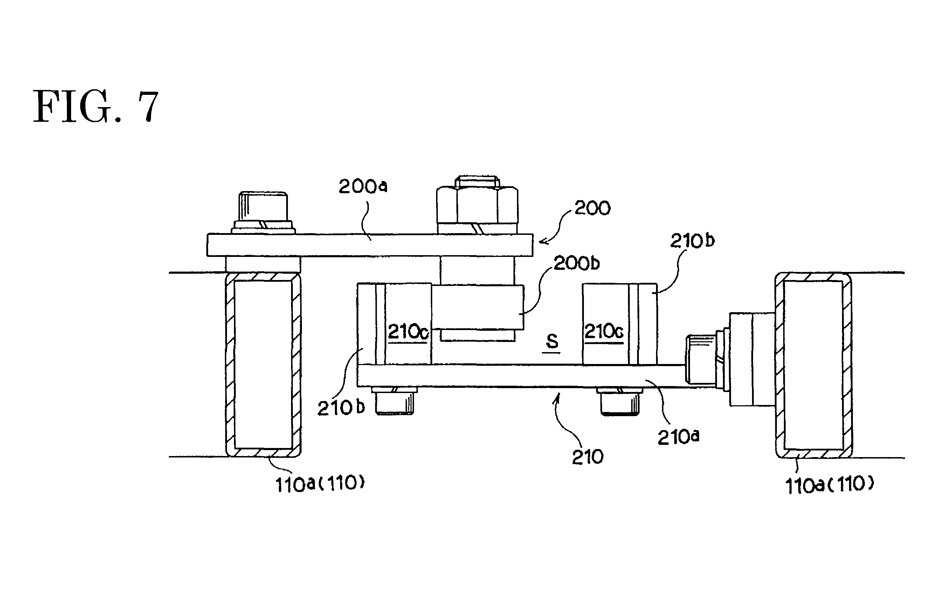

FIG. 7 is a schematic partial section showing a coupling construction of the driving member 200 and the driven member 210 as the carriage coupling means. With reference to FIGS. 4 and 7, the driving member 200 is comprised of a plate member 200a which cantilevers or projects from an upstream end of the carriage 100 with respect to the conveyance direction, and a rotatable cam 200b mounted on the lower surface of the plate member 200a. The driven member 210 is comprised of a plate member 210a which cantilevers or projects from a downstream end of the succeeding carriage 100, and a pair of projections 210b mounted on the upper surface of the plate member 210a. The projections 210b are spaced apart in the longitudinal direction of the carriages 100 and formed with cam surfaces 210c so that the rotatable cam 200b can be fitted into and withdrawn from an engaging space S defined between the projections 210b. The cam surfaces of the projections 210b can transmit a force of the rotatable cam 200b for moving along the longitudinal direction of the carriage 100 to the main frame 110 on which the driven member 210 is mounted, and permit the rotatable cam 200b to be fitted into and withdrawn from the engaging space S if the rotatable cam 200b moves in a direction substantially normal to the above direction. By this construction, the driving member 200 can be so coupled with the driven member 210 as to transmit a force for moving along the linear path to the succeeding carriage 100, and permit the rotatable cam 200b to disengage from the cam surface 210c by its rotation during a transition from the downstream end of the linear path to the turning path PH3 or PH4. When the carriage 100 returns to the linear path PH1 or PH2 from the turning path PH3 or PH4, the driving member 210 of this carriage 100 is coupled with the driving member 200 of the preceding carriage 100 by the rotation of the rotatable cam 200b to thereby couple this carriage 100 with the preceding carriage 100.

Next, how the embodiment described above operates is described.

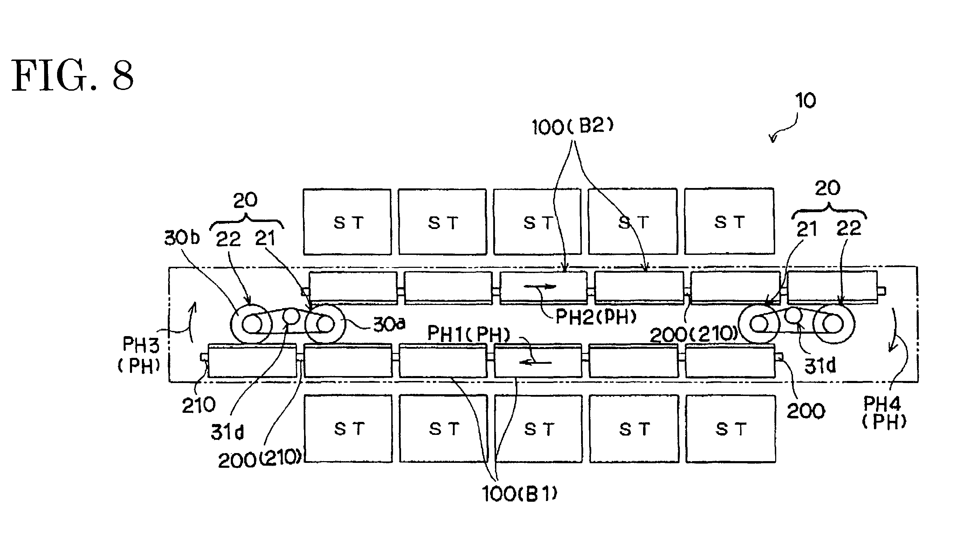

FIGS. 8 to 11 are schematic plan views showing conveyance of the carriages 100 according to the embodiment of FIG. 1.

First, with reference to FIG. 8, the driving members 200 and the driven members 210 of the respective carriages 100 are coupled with each other while the carriages 100 are arranged one after another along the forward and return paths PH1, PH2 of the conveyance path PH in the above construction. Accordingly, the carriages 100 are grouped into a coupled unit B1 extending along the forward path PH1 and a coupled unit B2 extending along the return path PH2. The coupled units B1, B2 preferably are substantially symmetrically arranged between the forward side and the return side in order to maintain a linked motion. However, the carriages 100 may be also asymmetrically provided, e.g. 5 carriages on path PH1 and 4 carriages on path PH2. In this state, pairs of the driving units 20 simultaneously drive the output sprockets 30a, 30b at the same speed, and some (two upstream located ones in the shown example) of the carriages 100 forming the coupling units B1, B2 are driven by the output sprockets 30a, 30b. Thus, the respective carriages 100 can be conveyed along a conveyance direction D as a whole.

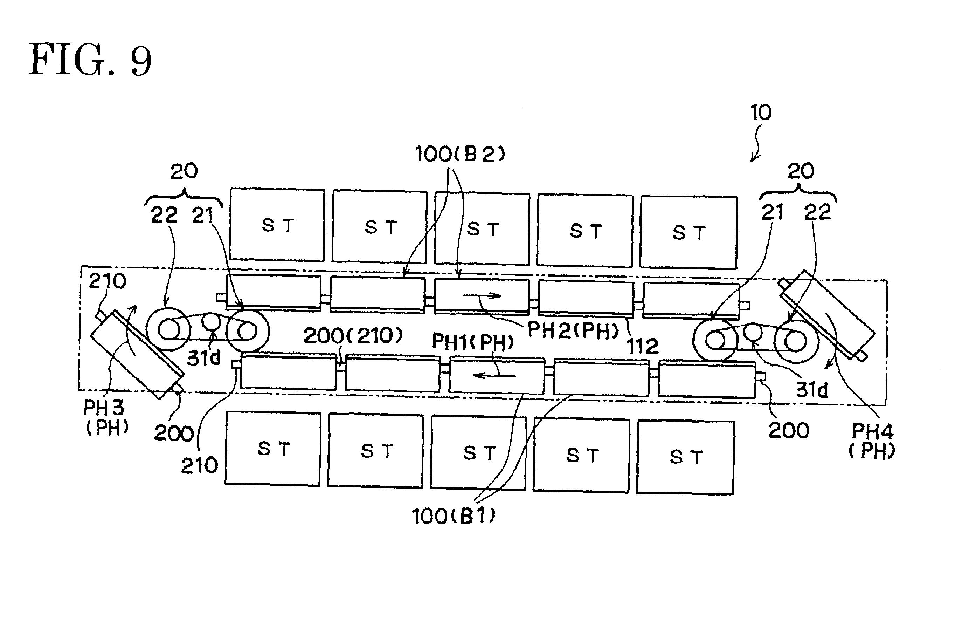

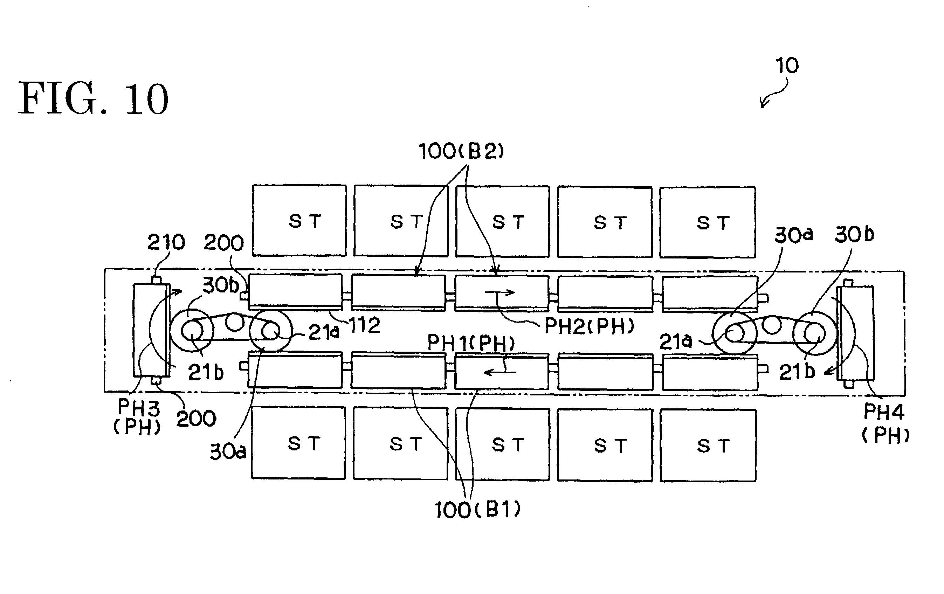

When the cams 120 and the recesses 35a are engaged with each other at the positions where the centers O1 (see FIG. 76) of the shafts 21b of the other sprocket units 22 and the centers O2 (see FIG. 76) of the cams 120 of the carriages 100 located at the downstream ends of the respective coupled units B1, B2 are located on horizontal lines substantially normal to the substantially linear paths (forward path PH1 and return path PH2) as shown in FIG. 6, only the carriages 100 at the downstream ends are separated from the coupled units B1, B2 by the constructions of the respective members 200, 210 as the carriage coupling means as shown in FIG. 9. In this state, the separated carriages 100 turn about the corresponding shafts 21b, respectively, as shown in FIGS. 9 and 10. On the other hand, the carriage 100 located at the downstream end of each coupled unit B1, B2 after such separation is linearly moved by the one output sprocket 30a to the downstream side substantially in synchronism with the turning of the separated carriage 100. Therefore, the carriages 100 can circulate from the upstream side to the downstream side along the conveyance path PH at a constant speed without interruption.

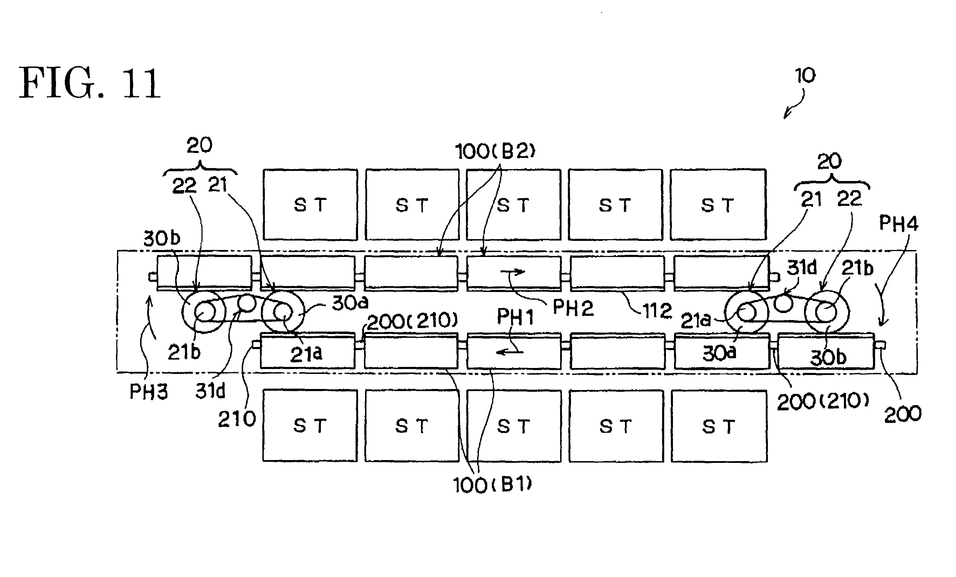

When the separated carriages 100 turn about the corresponding output sprockets 30b by 180°, the driven members 210 of these carriages 100 are coupled with the driving members 200 of the carriages 100 of the coupled units B1, B2 immediately downstream therefrom by the turning movements. Thus, all the carriages 100 are coupled with either the coupled unit B1 or B2 again as shown in FIG. 11. Therefore, the carriages 100 can be moved together as a whole by driving only the downstream carriages 100 of the coupled units B1, B2.

If the number of the stations ST installed should be changed, the above construction can easily cope with a change in specification of the stations ST only by changing the number of the base blocks 12 (see FIG. 1) to increase or decrease a spacing between the pair of driving units 12 and accordingly changing the number of the carriages to be coupled. Thus, unlike the prior art, it is not necessary at all to change the length of the endless chain and to couple the carriages again with the changed endless chain. As a result, a change in specification of the stations can be easily coped with at each stage of operation.

Particularly in the shown embodiment, the height of the carriages 100 can be set lower by as much as the height of the table 11 since the conveyance path PH is formed on the table 11 having a specified height. Thus, the carriages 100 can be formed smaller. This eliminates a possibility of damaging a floor surface and facilitates a maintenance such as cleaning.

The foregoing embodiment is merely an illustration of a preferred specific example of the present invention, and the present invention is not limited thereto.

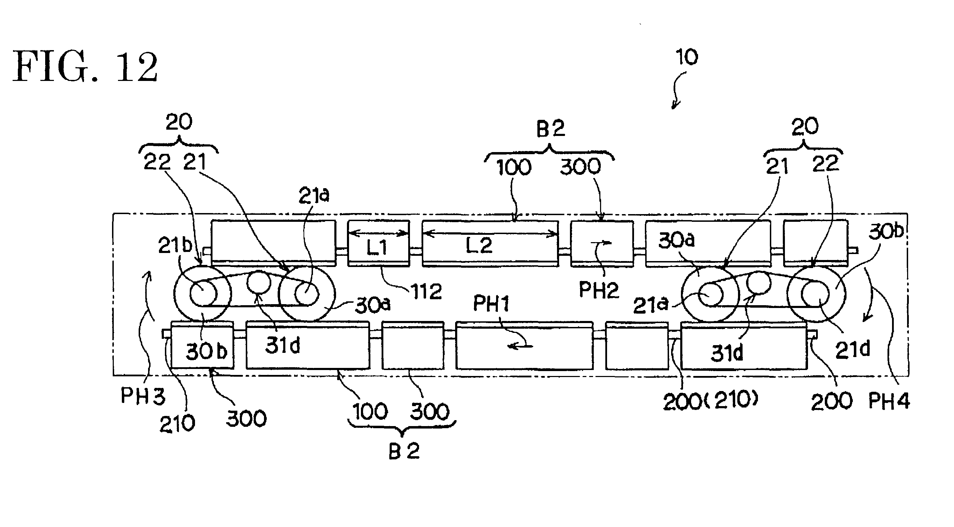

FIG. 12 is a schematic plan view showing another embodiment of the invention.

As shown in FIG. 12, carriages 100, 300 having lengths L1, L2 at a ratio e.g. of 1:2 may be alternately arranged.

Various other changes can be made within the scope of the present invention as claimed.

As described above, the respective carriages can be circulated only by providing a pair of driving units at the opposite ends of the conveyance path and driving the downstream ends of the forward moving coupled units and the returning coupled units. As a result, in the case that the conveyance path is changed, a change in specification can be relatively easily coped with only by changing a spacing between the pair of driving units and the number of the carriages coupled. Thus, unlike the prior art, it is not necessary at all to change the length of the endless chain and to couple the carriages again with the changed endless chain. This provides a remarkable effect of easily changing specification at each stage of operation.

### LIST OF REFERENCE NUMEALS

- 10 ...: endless conveyor
- 11 ...: table
- 12 ...: base block
- 20 ...: driving unit
- 30a ...: output sprocket (linear movement output member)
- 30b ...: output sprocket (linear movement output member)
- 35 ...: cam follower (turning movement output member)
- 100 ...: carriage
- 110 ...: main frame
- 200 ...: driving member (carriage coupling means)
- 210 ...: driven member (carriage coupling means)
- PH1 ...: forward path
- PH2 ...: return path
- PH3, PH4 ...: turning path
- PH ...: conveyance path
- 112 ...: chain (linear movement input member)
- 120 ...: rotatable cam (turning movement input member)

## Claims

1. A carriage (100; 300) for an endless conveyor (10) having an endless conveyance path (PH) comprised at least of a pair of substantially linear paths (PH1, PH2) and turning paths (PH3, PH4) connecting the opposite ends of the substantially linear paths (PH1, PH2), in which conveyor (10) a plurality of carriages (100; 300) are used and driven by a driving unit (20) of the conveyor (10) to circulate along the conveyance path (PH) in a predetermined conveyance direction, comprising:
a torque input member (112) for receiving a torque from the driving unit (20) for moving the carriage (100; 300) in the conveyance direction, and
a carriage coupling means (200; 210) for connecting carriages (100; 300) such that the torque received by one of the carriages (100; 300) arranged on the conveyance path (PH) from the driving unit (20) can be transmitted to the succeeding carriages (100; 300),
wherein the carriage coupling means (200; 210) separates the carriage (100; 300) from the succeeding carriage (100; 300) when this carriage (100; 300) moves from one linear path (PH1; PH2) to the turning path (PH3; PH4) while coupling the separated carriage (100; 300) with the preceding carriage (100; 300) when it moves from the turning path (PH3; PH4) to another linear path (PH2; PH1).

2. A carriage according to claim 1, wherein the carriage coupling means (200; 210) comprises at least a driving member (200) and a driven member (210).

3. A carriage according to claim 2, wherein the driving member (200) comprises of a rotatable cam (200b) provided on one carriage (100; 300) and the driven member (210) comprises and projections (210b) mounted on the adjacent carriage (100; 300), wherein the projections (210b) are spaced apart substantially in the longitudinal direction of the carriages (100; 300) and are formed with corresponding cam surfaces (210c) so that the rotatable cam (200b) can be fitted into and withdrawn from an engaging space (S) defined between the projections (210b).

4. A carriage according to one or more of the preceding claims, further comprising a torque input member having a linear movement input member (112) for transmitting an output of a linearly driving member (35a; 35b) of the endless conveyor (10) to the carriage (100; 300) by being detachably couplable to the linearly driving member (35a; 35b), and a turning movement input member (120) for transmitting a torque of a turning member (35) of the endless conveyor (10) to the carriage (100; 300) to turn it by being detachably couplable to the turning member while running.

5. A conveying mechanism for circulating a plurality of carriages (100; 300) according to one or more of the preceding claims in a predetermined conveyance direction along an endless conveyance path (PH) comprised of at least one pair of substantially linear paths (PH1, PH2) and turning paths (PH3, PH4) connecting the opposite ends of the substantially linear paths (PH1, PH2), comprising one or more driving units (20) for driving the respective carriages (100; 300), wherein driving units (20) comprise:
turning means (35; 120) for separating the carriages (100; 300) located at downstream ends of coupled units (B1; B2) of the respective carriages (100; 300) coupled along the substantially linear paths (PH1; PH2) and turning them along the turning paths (PH3; PH4), and
linear movement output members (30a; 30b; 112) which operate in synchronism with the turning means (35; 120) to convey the downstream ends of the coupled units (B1; B2) coupled along the substantially linear paths (PH1; PH2) to the turning means (120).

6. A conveying mechanism according to claim 5, wherein a pair of driving units (20) are provided at the opposite ends and between the substantially linear paths (PH1, PH2) for driving the respective carriages (100; 300).

7. A conveying mechanism according to claim 5 or 6, wherein the turning means (35; 120) comprises a cam follower (35) as a turning movement output member and a rotatable cam (120) as a turning movement input member.

8. A conveying mechanism according to one or more of the preceding claims 5 to 7, wherein the conveyance path (PH) is formed on a table (11) having a specified height.

9. A conveying mechanism according to one or more of the preceding claims 5 to 8, further comprising a plurality of base blocks (12) arranged one after the other, wherein the base blocks (12) comprise path defining means (13) defining the conveyance path (PH) on the base blocks (12).
